# FASCICULE DE BREVET EUROPEEN

(11) **EP 3 394 797 B1**
(45) Date de publication et mention de la délivrance du brevet: **17.04.2024**
(21) Numéro de dépôt: 16806139.8
(22) Date de dépôt: 07.12.2016
(51) Int. Cl.: G06N 3/063, G06N 3/048

(54) **CIRCUIT NEURONAL OPTIMISE, ARCHITECTURE ET PROCEDE POUR L'EXECUTION DES RESEAUX DE NEURONES**
OPTIMIERTE NEURONENSCHALTUNG UND ARCHITEKTUR UND VERFAHREN ZUR AUSFÜHRUNG VON NEURONALEN NETZEN
OPTIMIZED NEURON CIRCUIT, AND ARCHITECTURE AND METHOD FOR EXECUTING NEURAL NETWORKS

(30) Priorité: 21.12.2015 FR 1562918
(43) Date de publication de la demande: 31.10.2018
(73) Titulaire: Commissariat à l'Énergie Atomique et aux Énergies Alternatives, 75015 Paris (FR)
(72) Inventeur: CARBON, Alexandre, 91440 Bures Sur Yvette (FR); BICHLER, Olivier, 91300 Massy (FR); DURANTON, Marc, 91400 Orsay (FR); PHILIPPE, Jean-Marc, 91190 Gif-sur-Yvette (FR)
(74) Mandataire: Atout PI Laplace
(86) Numéro de dépôt international: PCT/EP2016/080004
(87) Numéro de publication internationale: WO 2017/108399

(56) Documents cités:
- US-A- 5 535 148
- ESRAA ZEKI MOHAMMED ET AL: "Hardware Implementation of Artificial Neural Network Using Field Programmable Gate Array", INTERNATIONAL JOURNAL OF COMPUTER THEORY AND ENGINEERING, vol. 5, no. 5, 5 octobre 2013 (2013-10-05) , pages 780-783, XP055303784, ISSN: 1793-8201, DOI: 10.7763/IJCTE.2013.V5.795
- P MOTCHA MARY RATHI PUSHPA ET AL: "Implementation of Hyperbolic Tangent Activation Function in VLSI", INTERNATIONAL JOURNAL OF ADVANCED RESEARCH IN COMPUTER SCIENCE & TECHNOLOGY (IJARCST 2014), vol. 2, no. Special 1, 1 mars 2014 (2014-03-01), pages 225-228, XP055303543, ISSN: 2347-9817
- Miroslav Skrbek: "FAST NEURAL NETWORK IMPLEMENTATION", , 1 janvier 2000 (2000-01-01), XP055303532, Extrait de l'Internet: URL:http://ncg.felk.cvut.cz/research/publi cations/nnw.pdf [extrait le 2016-09-19]
- ORTIGOSA E M ET AL: "Hardware description of multi-layer perceptrons with different abstraction levels", MICROPROCESSORS AND MICROSYSTEMS, IPC BUSINESS PRESS LTD. LONDON, GB, vol. 30, no. 7, 27 avril 2006 (2006-04-27) , pages 435-444, XP027950028, ISSN: 0141-9331 [extrait le 2006-11-01]

## Description

La présente invention concerne un circuit neuronal optimisé. Elle concerne également une architecture pour l'exécution de réseaux de neurones à base d'un tel circuit. L'invention concerne encore un procédé pour l'exécution de réseaux de neurones pouvant par exemple être appliqué au moyen de cette architecture.

L'invention s'applique notamment pour l'implémentation de réseaux de neurones sur silicium pour le traitement de signaux divers, y compris des signaux multidimensionnels comme des images. L'invention peut concerner plus particulièrement les réseaux de neurones profonds, comme par exemple les réseaux de neurones convolutionnels incluant notamment des prétraitements d'images de type convolutions de tailles différentes.

Les réseaux de neurones profonds, et plus spécifiquement convolutionnels, ont la particularité de s'organiser sous forme d'un nombre potentiellement élevé de couches successives de traitement, visant à extraire des informations de plus en plus pertinentes des entrées tout en réduisant le volume de données manipulées au fur et à mesure que l'on avance dans la chaîne de traitement. Cette réduction est réalisée à l'aide d'une succession de couches de convolution et de calcul de maxima locaux (ces deux couches faisant notamment ressortir certaines caractéristiques apprises si elles existent dans les données d'entrée), puis enfin de classification. La classification finale permet de catégoriser les données d'entrée en fonction des besoins déterminés hors-ligne, lors de l'apprentissage, par exemple une reconnaissance d'objets dans une image.

La description de cette chaîne de traitement montre que les opérations principales sont des accumulations de multiplications (sommes pondérées) entre des coefficients de filtres de convolution ou des poids synaptiques et des données d'entrée des couches. C'est le cas par exemple pour les couches de convolution en entrée de réseau (coefficients) ou pour les couches entièrement connectées dites « fully-connected » (poids synaptiques). Dans cet exemple, une couche « fully-connected » est composée de neurones dont les entrées sont connectées à toutes les sorties de la couche précédente. Ces opérations pourront être appelées MAC par la suite pour Multiplication et Accumulation. La chaîne comporte également une opération Maximum qui renvoie la valeur maximum sur un voisinage (par exemple, le pixel de plus forte intensité si l'on traite des images). Enfin, à la suite des MACs, on trouve en général une opération non linéaire. Cette fonction non linéaire peut être par exemple une fonction sigmoïde, une tangente hyperbolique ou encore un rectifieur linéaire. Certaines variantes de classifieurs utilisent aussi des fonctions à base radiale telle qu'une fonction gaussienne (cas des réseaux RBF : « Radial Basis Functions »).

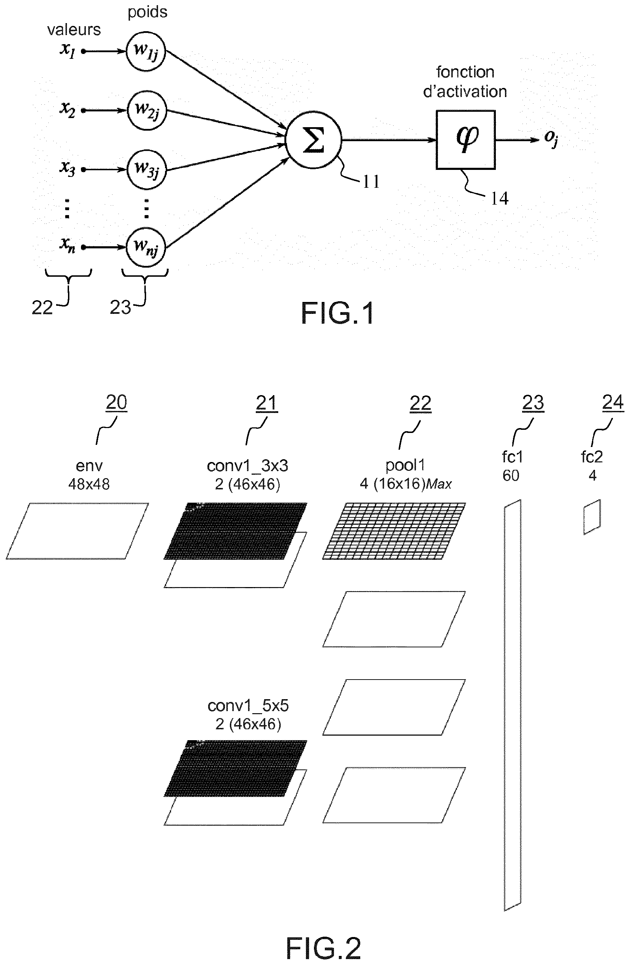

La figure 1 illustre la modélisation d'un neurone formel, utilisé typiquement dans un réseau de neurones profonds, mettant en oeuvre cette série de MACs suivie d'une fonction non linéaire. Le *j^{ième}* neurone formel d'une couche de neurones fait une somme 11 des valeurs d'entrées 22, *x₁* à *xₙ*, pondérées avec des poids synaptiques 13, *w*_{*1*j} à *wₙⱼ*, et enfin applique une fonction d'activation 14 qui est la fonction non linéaire. Ces opérations constituent la fonctionnalité principale d'un réseau de neurones. La pratique montre qu'il est nécessaire d'optimiser la réalisation de ces opérations, vis-à-vis des contraintes d'implémentation matérielle mais aussi des caractéristiques des réseaux de neurones. Les contraintes d'implémentation matérielles concernent notamment le coût de réalisation (surface silicium par exemple), la consommation d'énergie lors de l'exécution, la précision et les difficultés d'implémentation matérielle des fonctions non linéaires d'activation, ces fonctions étant en général complexes à réaliser sur du matériel.

Par ailleurs, le type de réseau de neurones (topologie d'interconnexion, nombres de neurones, fonctions non linéaires, etc.) implémenté sur une architecture dépend très fortement de l'application visée. D'un autre côté, l'évolution de la dynamique des données (nombre de niveaux de quantification des valeurs de ces données, dépendant du nombre de bits de codage) au sein de ce réseau dépend fortement du jeu de données 22 en entrée (images, signaux, données intermédiaires, etc.). De même, la précision des données manipulées dans l'accumulation 11 dépend de la position dans la chaîne. Dans un réseau neuronal convolutionnel (CNN pour « Convolutional Neural Network ») classique, les convolutions restent de dimensions relativement faibles, de 3×3 à 11×11 par exemple, nécessitant dans ce cas d'accumuler jusqu'à 121 valeurs. Lorsque l'on passe aux étages « fully-connected » de classification, et notamment sur les couches cachées, situées avant la couche finale de décision, on doit accumuler potentiellement plus de valeurs (correspondant aux sorties de la couche précédente pondérées par des poids synaptiques). Cela peut nécessiter plusieurs milliers ou dizaines de milliers d'accumulations. Ainsi, les circuits dédiés CNN ont notamment la particularité de nécessiter l'accumulation d'un volume important de données sur chacune des couches.

En plus du souci du bon dimensionnement architectural initial d'un circuit, par exemple la précision maximale des données et celle des opérateurs de calcul, une attention toute particulière doit être portée à l'évolution des valeurs des données manipulées en interne afin d'éviter toute saturation, et cela sans connaissance préalable du jeu de données en entrée. Par exemple l'accumulation maximale permise par l'architecture, donnée par la taille du registre d'accumulation en nombre de bits, doit être prise en compte. En effet une saturation en cours de calcul d'accumulation provoque une propagation d'erreur potentiellement amplifiée par la fonction d'activation 14, et propagée sur les différentes couches successives, entraînant le calcul d'un résultat erroné et donc un risque accru de fausse classification.

Enfin certains réseaux, ceux utilisant par exemple des fonctions à base radiale dites RBF (« Radial Basis Functions »), nécessitent de réaliser des sommes de données (par exemple provenant de soustractions à la base) dont les grandeurs ne sont pas connues à l'avance. De plus, les grandeurs relatives de deux valeurs différentes à sommer dans ce cas sont parfois même très différentes. Cela rend extrêmement compliqué la maîtrise de la cohérence du résultat de manière automatique (notamment lors de la somme d'une grande valeur avec plusieurs petites, les unes à la suite des autres).

Les paragraphes précédents montrent donc qu'un problème de maîtrise de la dynamique des données se pose, ainsi que leur codage les unes par rapport aux autres. Une solution consiste à réaliser une architecture purement dédiée pour un réseau ciblé, conduisant à prévoir une conception spécifique de ce réseau au détriment de la flexibilité puisque l'architecture ne peut pas être utilisée pour une autre application. Une telle solution sort du cadre de la présente invention qui cherche à cibler plusieurs types de réseaux avec la même architecture.

La plupart des architectures de l'art antérieur essaient de réaliser les calculs au plus près comme le ferait un programme informatique classique sur un ordinateur, c'est-à-dire en essayant de s'approcher du modèle du neurone formel, notamment en ce qui concerne la fonction non linéaire 14. Par exemple, sur certaines architectures, la précision des données est plutôt importante, celles-ci étant codées au moins sur 16 bits avec une virgule à position fixe. Un point critique dans l'implémentation matérielle des réseaux de neurones est le calcul des fonctions d'activation 14 du modèle du neurone formel, car elles sont non linéaires donc complexes à réaliser. Plusieurs techniques sont utilisées pour réaliser l'approximation de ces fonctions non-linéaires comme par exemple l'approximation linéaire par morceaux (« piecewise linear ») qui peut être couplée avec une mémoire permettant de programmer certaines valeurs de ces fonctions dans plusieurs intervalles et d'interpoler les autres valeurs. Cependant, ces solutions sont insatisfaisantes du point de vue de la surface (logique dédiée et mémoire supplémentaire à inclure dans le circuit, avec la consommation énergétique associée) et du temps de latence (nombre de cycles de calculs potentiellement important). En règle générale, les architectures implémentant des réseaux de neurones sont construites sur la base de la séquence d'opérations qu'elles ont à implémenter. Elles comportent une première partie composée d'un ou plusieurs multiplieurs, d'un accumulateur (pour sommer les multiplications) et ensuite d'un bloc réalisant une ou plusieurs fonctions non linéaires, sur le modèle du neurone formel décrit à la figure 1. En ce qui concerne cette première partie, peu de divergences apparaissent entre les architectures, mis à part les différentes précisions mises en oeuvre, précision des données d'entrée, des poids et largeur de l'accumulateur notamment. Plusieurs techniques sont en revanche mises en oeuvre pour la réalisation des aspects non linéaires des fonctions d'activation. Une première solution de type approximation linéaire par morceaux a été présentée ci-dessus. D'autres solutions sont également mises en oeuvre, elles utilisent des tables programmables, implémentées avec de la mémoire (potentiellement externe au circuit lui-même), et des comparateurs permettant par exemple d'associer une valeur de sortie à un intervalle de valeurs d'entrées. Cette technique permet ainsi d'implémenter plusieurs types de fonctions comme un seuillage binaire, ne nécessitant que deux valeurs de sortie, voire des fonctions plus complexes. En effet, plus il y a de lignes dans la mémoire, plus l'approximation de la fonction peut être précise. Une tangente hyperbolique par exemple, peut ainsi être approximée de manière suffisante pour l'application avec une table importante. Les tables peuvent être couplées avec des opérateurs logiques permettant de réaliser des fonctions encore plus complexes avec approximation linéaire par morceaux comme indiqué ci-dessus.

Dans d'autres solutions, les fonctions non linéaires sont implémentées par un système à deux tables LUT (« Look-Up Table »), une table étant utilisée pour l'implémentation standard des fonctions non linéaires et l'autre étant utilisée avec une meilleure précision pour un intervalle bien particulier dans la fonction, par exemple autour de 0 dans le cas d'une fonction sigmoïde. D'autres solutions sont basées sur la communication et le traitement série des données (bit à bit). Plus particulièrement, ces solutions proposent de séparer le calcul de la fonction d'activation en deux parties, une partie étant effectuée localement dans chaque neurone et l'autre partie étant effectuée globalement en étant partagée par différents neurones. La non-linéarité est réalisée par un bloc de calcul centralisé dans l'architecture par accès à une table.

Une analyse des solutions de l'art antérieur mettent en lumière les points suivant :
- De nombreuses architectures, du fait de la complexité d'implémentation dans la technologie disponible et pour séparer les contraintes, déplacent le calcul des non linéarités sur un circuit externe, en tous cas en dehors de l'architecture principale permettant d'implémenter le réseau de neurones ;
- La plupart utilisent ensuite des tables (par exemple des tables de correspondance, ou « Look Up Tables ») et/ou des approximations linéaires par morceaux.

L'utilisation d'une table, et notamment d'une « Look-Up Table », est gourmande en silicium et nécessite de charger et décharger la table selon la fonction d'activation approximée ou encore en fonction de la valeur d'entrée.

La réalisation d'un processeur élémentaire mettant en oeuvre un modèle de neurone formel générique, c'est-à-dire apte à couvrir un grand nombre de types de réseaux de neurones différents et donc d'applications, pose finalement des problèmes d'implémentation de fonctions non-linéaire se traduisant par un coût d'espace mémoire (et donc de surface silicium et de consommation énergétique) et/ou par l'utilisation d'approximations limitant la couverture des applications, allant donc à l'encontre de la flexibilité d'utilisation. Cette réalisation pose également un problème de gestion de la des grandeurs relatives des données, en particulier pour le calcul des fonctions d'activation complexes dans les réseaux RBF, utilisant des fonctions gaussiennes.

Un document Esraa Zeki Mohammed et al « Hardware Implementation of Articifial Neural Network Using Field Programmable Gate Array », INTERNATIONAL JOURNAL OF COMPUTER THEORY AND ENGINEERING, vol. 5, no 5, 1 octobre 2013, pages 780-783.

L'invention a notamment pour but de résoudre ces problèmes. En d'autres termes, elle a pour but de permettre l'implémentation de manière efficace sur silicium des réseaux de neurones à couches profondes, tolérants à une faible précision des données manipulées mais pas à l'accumulation d'erreurs, nécessitant de nombreuses multiplications/accumulations et des fonctions non-linéaires, le tout avec une précision des données intermédiaires variable. Cette efficacité se traduit notamment par une faible surface silicium occupée, une faible énergie consommée et par l'utilisation de cellules logiques standard (disponibles dans toutes les technologies classiques).

A cet effet, l'invention a pour objet un circuit neuronal apte à réaliser une somme pondérée de signaux numérisés d'entrée et à appliquer une fonction d'activation à ladite somme pondérée pour produire en sortie un signal d'activation numérisé, ledit circuit comportant au moins :
- un multiplieur multipliant chaque signal d'entrée (*x₁* à *xₙ*) avec une valeur de poids (*w₁ⱼ* à *wₙⱼ*) *;*
- un accumulateur accumulant les résultats dudit multiplieur pour produire ladite somme pondérée et ;
- une unité d'activation effectuant ladite fonction d'activation ;
ladite unité d'activation comportant au moins une unité de décalage apte à approximer une fonction d'activation non linéaire, le résultat de ladite fonction d'activation approximée étant obtenu par un ou plusieurs décalages arithmétiques appliqués sur ladite somme pondérée, l'unité de décalage étant apte à effectuer une opération de saturation directement sur ladite somme pondérée ou sur un résultat temporaire de la fonction d'activation avant saturation, la donnée saturée étant délivrée en sortie de ladite unité d'activation, la saturation étant réalisée par un décalage à droite sur ladite somme, dont la valeur est déduite de la position de saturation désirée, par conservation des bits de poids faible en fonction de la précision finale voulue, l'unité d'activation comporte un rectifieur linéaire apte à effectuer en outre une rectification linéaire sur la donnée présente en sortie de l'unité de décalage, ladite donnée étant le résultat d'une saturation effectuée directement sur ladite somme pondérée présente en entrée de ladite unité d'activation, ladite rectification linéaire réalisant ladite fonction d'activation.

Ledit circuit neuronal comporte par exemple un registre mémorisant la position du bit de poids fort de chaque nouvelle donnée accumulée dans ledit accumulateur, la mémorisation de ladite position étant effectuée simultanément à la mémorisation dans le registre d'accumulation de l'accumulation de ladite nouvelle donnée ou du chargement dudit registre d'accumulation.

Ladite position du bit de poids fort est par exemple transmise à l'unité de décalage, le décalage appliqué étant déduit de ladite position, ou d'une position de bit de poids fort précédemment sauvegardée ou d'un paramètre quelconque fixé par l'utilisateur ou contenu en mémoire ou précédemment calculé.

Ladite position du bit de poids fort est par exemple transmise à l'unité de décalage, le décalage appliqué pour l'opération de saturation étant déduit de ladite position ou d'une position de bit de poids fort précédemment sauvegardée, ou d'un paramètre quelconque fixé par l'utilisateur ou contenu en mémoire ou précédemment calculé.

Ladite unité d'activation est par exemple apte à approximer une fonction à base radiale, à partir d'un enchaînement d'opérations de décalage et de saturation effectuées par ladite unité de décalage.

La valeur de chaque décalage est par exemple déduite de ladite position du bit de poids fort de la donnée décalée ou d'une position de bit précédemment sauvegardée, ou d'un paramètre quelconque fixé par l'utilisateur ou contenu en mémoire ou précédemment calculé.

Ledit circuit neuronal comporte par exemple une unité arithmétique et logique réalisant des opérations sur les signaux d'entrées.

L'invention concerne également une architecture neuronale composée de circuits neuronaux tels que celui décrit précédemment.

L'invention concerne encore un procédé d'exécution d'un réseau de neurones, ledit procédé réalisant pour chaque neurone une somme pondérée de signaux numérisés d'entrée, codés sur un nombre de bits donnés, et appliquant une fonction d'activation à ladite somme pondérée pour produire en sortie un signal d'activation, ledit procédé comportant au moins les étapes suivantes :
- multiplier chaque signal d'entrée (*x₁* à *xₙ*) avec une valeur de poids (*w₁ⱼ* à *wₙⱼ*) ;
- accumuler les résultats de la multiplication dans un accumulateur pour produire ladite somme pondérée et ;
- effectuer ladite fonction d'activation par un ou plusieurs décalages arithmétiques sur des bits de ladite somme pondérée stockés dans ledit accumulateur,

effectuer une opération de saturation directement sur ladite somme pondérée ou sur ledit résultat de la fonction d'activation, la donnée saturée étant délivrée en sortie de ladite fonction d'activation, la saturation étant réalisée par un décalage à droite sur ladite somme, dont la valeur est déduite de la position de saturation désirée, par conservation des bits de poids faible en fonction de la précision finale voulue,
effectuer une rectification linéaire sur la donnée présente en sortie de l'opération de saturation, ladite donnée étant le résultat d'une saturation effectuée directement sur ladite somme pondérée, ladite rectification linéaire réalisant ladite fonction d'activation.

Il comporte par exemple une étape de mémorisation de la position du bit de poids fort de chaque nouvelle donnée accumulée, ladite étape de mémorisation étant effectuée simultanément à la mémorisation de ladite nouvelle donnée.

Le ou les décalages appliqués pour effectuer ladite fonction d'activation sont par exemple déduits de ladite position ou d'une position de bit de poids fort précédemment sauvegardée, ou d'un paramètre quelconque fixé par l'utilisateur ou contenu en mémoire ou précédemment calculé.

Le ou les décalages appliqués pour l'opération de saturation sont par exemple déduits de ladite position ou d'une position de bit de poids fort précédemment sauvegardée, ou d'un paramètre quelconque fixé par l'utilisateur ou contenu en mémoire ou précédemment calculé..

Ledit procédé peut réaliser l'approximation d'une fonction d'activation à base radiale, à partir d'un enchaînement d'opérations de décalages ainsi que par des saturations. La valeur de chaque décalage est déduit de ladite position du bit de poids fort de la donnée décalée ou d'une position de bit précédemment sauvegardée, ou d'un paramètre quelconque fixé par l'utilisateur ou contenu en mémoire ou précédemment calculé.

Ledit procédé est apte à être appliqué au moyen d'une architecture telle que décrite précédemment.

L'invention concerne également un produit programme d'ordinateur, comprenant des instructions de code permettant d'effectuer les étapes dudit procédé lorsque ledit programme d'ordinateur est exécuté sur un circuit neuronal ou une architecture tels que précédemment divulgués.

D'autres caractéristiques et avantages de l'invention apparaîtront à l'aide de la description en regard des figures annexées qui représentent :
- La figure 1, déjà décrite, une modélisation d'un neurone formel ;
- La figure 2, un exemple de réseaux de neurones convolutionnels ;
- La figure 3, un exemple de réalisation d'un circuit neuronal selon l'invention ;
- La figure 4, un schéma fonctionnel d'une unité générique implémentant efficacement diverses fonctions d'activation, utilisée dans le circuit selon l'invention.

La figure 2 présente un exemple de réseau de neurones convolutionnel, composé de quatre étages successifs :
- Un étage de convolution 21, réalisant sur une image d'entrée 20 deux convolutions avec filtres 3x3 et deux convolutions avec filtres 5x5, une fonction non linéaire étant en plus appliquée en sortie ;
- Un étage 22 de type maximas locaux (pool1, encore appelé « max pooling ») ;
- Un étage complètement connecté « fully connected » 23 (fc1) avec 60 neurones (couche cachée du classifieur), chaque neurone correspondant à l'accumulation de l'ensemble des valeurs pondérées en sortie de l'étage de « max pooling » avec application d'une fonction non linéaire sur le résultat de cette accumulation, cette fonction étant par exemple une tangente hyperbolique ;
- Un deuxième étage « fully connected » 24 (fc2) avec 4 neurones sur la couche de sortie (comprenant les sommes pondérées et l'application d'une fonction d'activation).

L'application utilisant ce type de réseaux de neurones nécessite notamment la gestion d'opérations de type multiplication, accumulation et d'approximation de fonctions non linéaires. D'autres opérations sont également nécessaires et doivent être ajoutées au chemin de données global à l'intérieur du processeur implémentant le réseau pour permettre l'exécution des applications, comme les opérations de type maximum local pour les phases de « max pooling » (détermination de la valeur maximale des données sur un masque et extraction de cette valeur en sortie).

L'invention concerne particulièrement les processeurs ou circuits élémentaires mettant en oeuvre un modèle neuronal du type de celui de la figure 1, implémentant notamment les opérateurs critiques que sont la multiplication et l'accumulation et les fonctions non linéaires d'activation. Face à la prédominance au sein des réseaux convolutionnels des opérations de multiplication-accumulation au niveau des couches de convolution et des couches dites « fully connected », il est essentiel de réaliser ces dernières avec des performances élevées. C'est pourquoi les opérateurs de multiplication et d'accumulation doivent pouvoir fonctionner simultanément, en pipeline ou non. Un autre aspect essentiel dans l'optique d'une réalisation de convolutions avec des filtres de taille importante et pour rendre possible la réalisation des étages « fully connected » est d'assurer un dimensionnement suffisant du registre d'accumulation, afin de garantir la possibilité d'accumuler un grand nombre d'éléments pondérés.

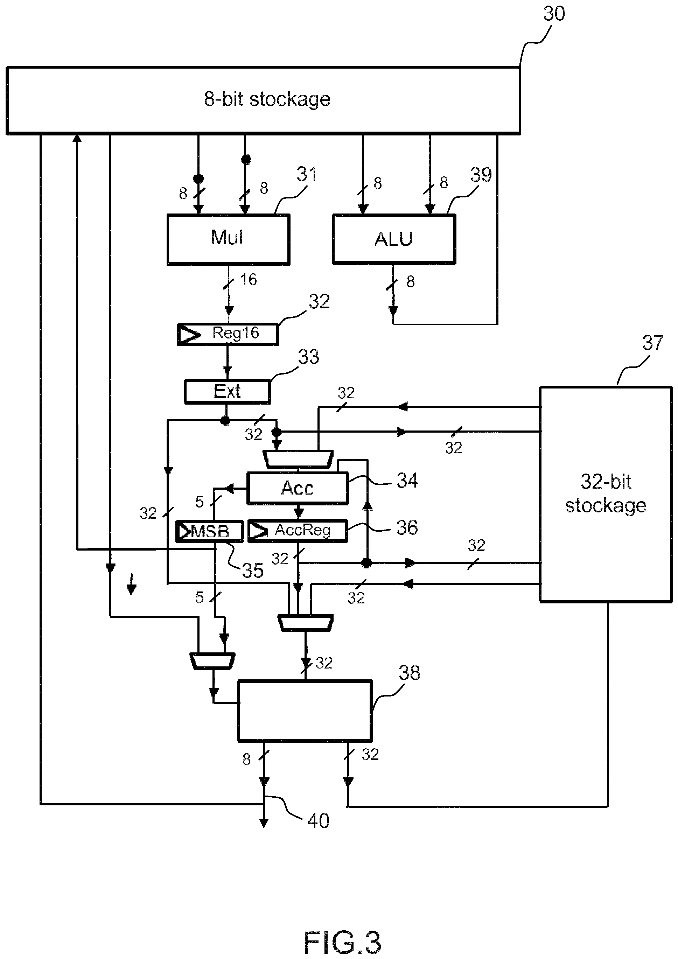

La figure 3 illustre un exemple de réalisation d'un circuit neuronal selon l'invention. A titre d'exemple, les données d'entrée sont ici codées sur 8 bits. Un circuit selon l'invention peut bien sûr fonctionner avec d'autres codages (par exemple, 4 ou 16 bits). Ce dernier peut donc être changé, tout en veillant aux conséquences de son évolution sur les différents opérateurs (typiquement l'accumulateur). A ce propos, chaque opérateur et structure de mémorisation peut être adapté à l'application. Par exemple, l'accumulateur peut stocker 48 ou 64 bits avec des données 8 bits en entrée, si de nombreuses accumulations sont nécessaires dans la chaîne de traitement implémentée.

Le circuit comporte une unité de multiplication 31. Celle-ci reçoit en entrée d'une part les valeurs d'entrée 22, *x₁* à *xₙ*, et d'autre part les poids synaptiques 13, *w₁ⱼ* à *wₙⱼ.* Dans un exemple de réalisation, cette unité permet de gérer des données 8 bits signées et non signées (provenant de la mémoire de stockage 30) de telle manière qu'il est possible de réaliser des multiplications de données non signées par des données signées et des multiplications de données signées par des données signées. Dans le mode de réalisation 8 bits de la figure 3, un résultat signé sur 16 bits est ainsi obtenu. Ce résultat, correspondant à une entrée pondérée, *xᵢ* × *wᵢⱼ*, est ensuite envoyé à un registre de pipeline 32. Dans l'exemple de la figure 3, ce registre intermédiaire est un registre 16 bits. Il est optionnel, son utilisation dépendant notamment de la longueur maximale souhaitée pour le chemin critique au sein du circuit neuronal (déterminant la fréquence de fonctionnement du circuit). Le choix de la gestion des nombres non signés et signés est lié à une spécificité des traitements à réaliser. En effet, alors que les poids 13, permettant la pondération des données d'entrée autant pour les étages de convolution que pour les étages « fully connected », sont signés, ces données d'entrée 22 peuvent être non signées afin de conserver une pleine dynamique de codage. C'est par exemple le cas pour des valeurs de pixels codées sur 8 bits en non signé pour conserver la dynamique de 256 valeurs situées entre 0 et 255.

Le registre 32 est suivi d'une unité d'extension 33 également optionnelle. Elle permet l'extension de la longueur des données, 16 bits à 32 bits dans l'exemple de la figure 3, par recopie du bit de signe (opération dite d'extension de signe).

Une unité d'accumulation 34 est ensuite présente sur le chemin des données.

Dans un mode de fonctionnement 8 bits, comme l'exemple de la figure 3, consistant en une succession d'opérations de multiplication et d'accumulation réalisées par le multiplieur 31 et l'accumulateur 34, la donnée 16 bits signée récupérée en sortie du registre de pipeline 32 du multiplieur, au cycle suivant la multiplication, est étendue sur 32 bits (par exemple) selon son bit de signe, puis est accumulée au sein du registre d'accumulation avec le contenu de ce dernier. L'unité d'accumulation effectue ainsi tout au long de cycles successifs la somme 11 des valeurs pondérées.

Dans un mode de réalisation avantageux, la position du bit significatif du résultat de chaque nouvelle accumulation est calculée simultanément à l'accumulation d'une nouvelle donnée. Le bit significatif que l'on appelle également le bit de poids fort sera appelé par la suite MSB (« Most Significant Bit »). Ce MSB peut également correspondre au signe de la donnée.

La position du MSB est stockée dans un registre 35, dit registre MSB, prévu à cet effet. Parallèlement, la dernière valeur accumulée est stockée dans un registre 36 situé en sortie de l'unité d'accumulation 34. Dans l'exemple de la figure 3, la position du MSB est codée sur 5 bits, afin de coder les 2⁵ = 32 positions possibles.

Ce calcul et ce stockage de la position du MSB par rapport à la donnée courante contenue dans le registre d'accumulation permet le calcul de fonctions d'activations non linéaires complexes, de façon simple. Ce calcul est décrit par la suite. Les différentes positions du MSB peuvent être sauvegardées pour des utilisations ultérieures.

Fonctionnellement, l'accumulateur permet aussi bien de charger une valeur en vue de l'initialisation de son registre associé que d'accumuler cette valeur entrante avec la valeur courante au sein de ce même registre. Dans tous les cas, la position du bit de signe (MSB) du mot à charger dans le registre d'accumulation est mise à jour. Cette donnée accumulée ou chargée provient soit du multiplieur 31, après extension 33 de signe de 16 à 32 bits, soit d'un registre de sauvegarde 37, qui peut stocker les données sur 8, 16 ou 32 bits étendues sur 32 bits par extension de signe.

Pour le calcul des fonctions d'activation, le circuit neuronal selon l'invention comporte une unité d'activation générique 38. Cette unité permet de calculer les fonctions d'activation 14 susceptibles d'être utilisées au sein des neurones compris dans les différentes couches. Plus particulièrement, elle effectue l'approximation de ces fonctions non linéaires. Avantageusement, les essais et simulations réalisés par la Déposante ont montré que les fonctions non linéaires d'activation peuvent valablement être approximées à bases de décalages de bits. L'unité d'activation générique comporte donc une unité de décalage arithmétique, opérant des décalages à droite ou à gauche en fonctions des besoins de l'approximation. Fonctionnellement, elle permet par exemple de décaler un mot de 32 bits, provenant du registre de sauvegarde 37 ou de l'accumulateur 36, de n'importe quelle valeur entre 0 et 31 aussi bien à gauche qu'à droite (en se basant sur l'exemple d'un mode de fonctionnement 8 bits avec accumulateur 32 bits). Il permet ainsi de multiplier ou diviser par un multiple de 2 cette valeur. L'unité d'activation générique 38 comporte également une fonction de saturation, permettant de saturer la valeur entrante (par exemple codée sur 32 bits) sur 8 bits dans notre exemple. Afin de mutualiser les ressources, cette saturation est réalisée à l'aide de l'unité de décalage en réalisant un décalage à droite sur le mot de 32 bits entrant par rapport à la position de la saturation désirée, par conservation des bits de poids faible en fonction de la précision finale voulue. Le résultat, codé sur 8 bits dans notre exemple, est présent en sortie 40 de l'unité 38, et correspond aux 8 bits de poids faible du mot de 32 bits après décalage.

L'unité d'activation générique 38 comporte également une fonction de type rectifieur linéaire, retournant 0 si la valeur du nombre saturé est négative, ou retournant la valeur en question dans le cas contraire. En d'autres termes, le rectifieur linéaire agit en sortie de la saturation.

La fonction d'activation 14 est de plus en plus utilisée dans les réseaux de neurones profonds. Grâce à l'invention, il est possible d'approximer (possiblement en un cycle d'horloge) des fonctions d'activation non linéaires, notamment les fonctions sigmoïdes, tangente hyperbolique ou rectifieur linéaire. Cette approximation est tout du moins suffisante pour conserver une fonctionnalité applicative complète des réseaux de neurones les utilisant, comme l'ont montré les essais et simulations réalisés par la Déposante. D'autres fonctions complexes peuvent également être réalisées avec un enchaînement d'opérations sur plusieurs cycles. C'est notamment le cas pour les fonctions à base radiale des classifieurs RBF, notamment la fonction gaussienne. Ce type de réseau nécessite le calcul d'une distance entre les données d'entrées et une référence (la distance étant par exemple implémentée comme étant le carré de la distance Euclidienne entre le vecteur des entrées et le vecteur des données de référence) avant application de la fonction à base radiale et saturation. La valeur du décalage et/ou de la saturation est contrôlée par un mot de 5 bits en entrée, pour l'exemple d'une donnée accumulée de 32 bits, indiquant le décalage à réaliser entre 0 et 31 bits, ainsi qu'un mot de contrôle sur 2 bit, permettant d'indiquer s'il s'agit d'un décalage à droite, à gauche, d'une saturation ou d'un rectifieur linéaire. Le décalage, codé sur 5 bits, peut être soit spécifié directement par l'utilisateur via le champ « immédiat » d'une instruction de contrôle, soit provenir de la mémoire ou d'un registre de sauvegarde via l'instruction de contrôle associée (valeur mise en mémoire ou précédemment calculée), ou être avantageusement déduit de la position du MSB du mot accumulé, contenue dans le registre MSB 35, permettant ainsi d'en réaliser la saturation et/ou la normalisation directe au cycle suivant.

Dans l'optique d'être réutilisé, le bit MSB peut être envoyé vers un registre de sauvegarde, notamment pour réaliser une normalisation sur une position identique sur différents mots de 32 bits, ce qui est notamment utile pour le calcul d'une fonction gaussienne, fonction non linéaire des réseaux RBF, implémentant une fonction exponentielle sur une somme de valeurs élevées au carré, obtenues en soustrayant une somme pondérée et une valeur référence, vue comme le « centre » de la fonction à base radiale, gaussienne par exemple (carré d'une distance entre deux vecteurs, par exemple). Les mots normalisés et/ou saturés peuvent être sauvegardés au sein des mémoires de stockage 30 ou 37 pour être utilisés ou envoyés directement en sortie du circuit neuronal.

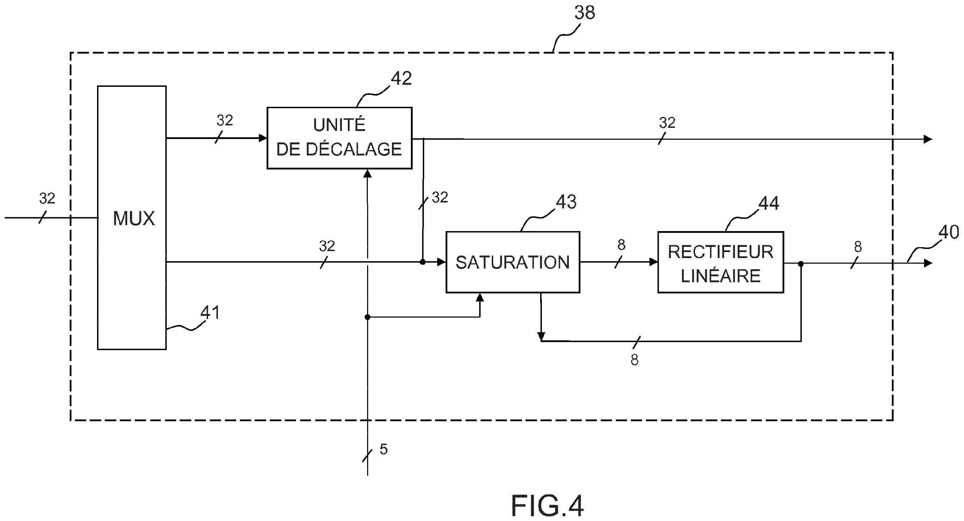

La figure 4 présente un schéma fonctionnel de l'unité d'activation 38 mettant en oeuvre les fonctionnalités précédemment décrites. L'unité d'activation comporte une unité de décalage 42 effectuant les opérations de décalage précédemment décrites. La sortie de l'unité de décalage est reliée à l'entrée d'une unité de saturation 43. Dans un mode de réalisation possible, particulièrement avantageux, l'unité de saturation 43 est confondue avec l'unité de décalage 42.

La donnée saturée, présente en sortie de cette unité 43, est transmise en sortie 40 de l'unité d'activation. Par cette première voie, passant par l'unité de décalage 42 et l'unité de saturation 43, l'unité d'activation réalise les fonctions non linéaires complexes du type tangente hyperbolique. Une autre voie réalise la rectification linéaire. A cet effet, l'unité d'activation comporte un rectifieur linéaire 44 en sortie de l'unité de saturation 43, ces deux éléments 43, 44 formant cette deuxième voie. En entrée, un multiplexeur 41 dirige le signal entrant selon l'une ou l'autre voie.

Un signal de contrôle, par exemple codé sur 5 bits, indique à l'unité de décalage ou à l'unité de saturation la valeur du décalage à effectuer.

On revient au circuit neuronal de la figure 3. Ce circuit selon l'invention comporte par exemple une unité arithmétique et logique 39 (ALU) notamment en charge d'opérations arithmétiques, utilisée par exemple pour le calcul des distances en cas d'implémentation de réseaux de type RBF. Cette unité 39 permet également la réalisation des opérations de type « max pooling » pour les couches associées. Dans l'exemple de réalisation de la figure 3, elle opère sur des données de 8 bits, signées ou non signées, et retourne des résultats également sur 8 bits, eux aussi signés ou non signés.

Une deuxième unité de stockage 30, composés de registres de stockage 8 bits, est reliée au multiplieur 31, à l'ALU 39 et à l'unité d'activation (pour le paramètre indiquant la valeur du décalage à réaliser, en ne récupérant que les 5 bits de poids faibles sur le mot de 8 bits entrant). Les deux bancs de registres de stockage 30, 37 assurent la gestion des données en provenance d'une mémoire centrale et/ou la sauvegarde des résultats avant leur envoi vers celle-ci, mais assurent aussi la sauvegarde des résultats temporaires dans le cadre d'opérations multi-cycles. A cet effet, ils sont également reliés à l'unité d'accumulation 34 et à l'unité d'activation générique 38. En particulier, la sortie 8 bits est rebouclée sur le banc de registres de stockage 8 bits, lui-même relié en entrée de l'unité d'activation 38. La sortie de l'ALU 39 est également rebouclée sur le banc de registres de stockage 8 bits. L'unité d'activation 38 comporte une sortie 32 bits pour stocker des résultats de calcul intermédiaire dans l'unité de stockage 32 bits. Cette unité de stockage 32 bits reboucle également sur l'unité d'accumulation 34 et l'unité d'activation 38. Elle stocke également les données étendues sur 32 bits en provenance de l'unité d'extension 33.

Un circuit neuronal selon l'invention apporte de nombreux avantages. En particulier l'utilisation d'opérateurs de calcul 31, 39 à faible précision pour les multiplications et la sortie du chemin de données en sortie 40 du circuit, après saturation, permet de diminuer la taille globale du chemin de données et des ressources mémoires et d'interconnexions nécessaires, 8 bits suffisant. Cela prend avantageusement en compte le fait que les réseaux de neurones sont tolérants aux calculs en précision réduite, en phase de reconnaissance.

L'utilisation d'opérateurs 34, 38 de taille plus importante, opérant sur 32 bits, pour l'accumulation 11 et les aspects liés à la non linéarité permettent à un programmeur de contrôler l'évolution de la grandeur des données (i.e. le nombre de bits maximum qu'il faut pour les coder). Cette taille relativement importante par rapport à la taille des opérateurs d'entrée permet de repousser les limites du nombre d'accumulations de données pondérées. De plus, ces opérateurs sont dotés de mécanismes permettant de remonter tout problème de précision au programmeur, lui permettant de gérer les éventuelles saturations pour limiter l'influence des erreurs.

L'utilisation d'un mécanisme au niveau de l'accumulation des données permettent en temps réel d'obtenir la grandeur des données accumulées, en calculant à chaque cycle de fonctionnement la position du bit significatif du mot contenu dans l'accumulateur, améliore grandement le fonctionnement du circuit. En particulier, cette position peut être transmise au programmeur ou être utilisée de manière automatique pour saturer ou normaliser une donnée en prenant en compte sa valeur par rapport à une référence (normalisation). L'unité d'activation générique 38 permet d'approximer diverses fonctions non linéaires en un ou plusieurs cycles, plusieurs fonctions d'activation caractéristiques des réseaux de neurones étant approximables. Elle est aussi utilisable pour effectuer des normalisations de données, c'est-à-dire mettre toutes les données sur une même référence, grâce au même opérateur effectuant des décalages à droite et à gauche. Cela permet de diminuer la taille de l'ensemble par rapport à deux opérateurs dédiés différents tout en conservant la fonctionnalité générique.

Un circuit selon l'invention présente également une liaison intelligente des opérateurs entre eux, notamment de l'unité d'accumulation 34 et de l'unité d'activation 38 approximant les fonctions non linéaires. En effet, la position du MSB du mot contenu dans le registre d'accumulation 36, peut ainsi automatiquement piloter l'unité d'activation 38 de manière à faire sortir un mot de 8 bits significatifs (bits de poids forts) et dépendant des données accumulées que l'on ne connaît pas par avance et/ou de réaliser une normalisation dépendant des mêmes données.

L'invention permet donc avantageusement d'exécuter avec une forte efficacité énergétique et surfacique des applications à base de réseaux de neurones profonds tout en garantissant les performances applicatives et une grande maîtrise par le programmeur de la précision des données propagées par la chaîne de traitement. L'invention exploite avantageusement les réductions possibles de précision des données manipulées dans la phase de reconnaissance pour approximer les fonctions non linéaires d'activation avec des opérateurs simples. Elle permet également d'assurer la programmation d'applications sans connaissance préalable du jeu de données grâce à l'exploitation judicieuse de la position du MSB, offrant une adaptation à différents jeux de données et à différentes topologies de réseaux, ainsi qu'un dimensionnement des opérateurs en fonctions des applications.

Une architecture neuronale permettant d'effectuer les étapes du procédé d'exécution du réseau de neurones selon l'invention, comporte des éléments matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple.

## Revendications

1. Circuit neuronal apte à réaliser une somme pondérée (11) de signaux numérisés d'entrée (12), codés sur un nombre de bits donné, et à appliquer une fonction d'activation (14) à ladite somme pondérée pour produire en sortie (40) un signal d'activation numérisé, ledit circuit comportant au moins :
- un multiplieur (31) multipliant chaque signal d'entrée (*x₁ à xₙ*) avec une valeur de poids (*w₁ⱼ* à *wₙⱼ*) ;
- un accumulateur (34) accumulant les résultats dudit multiplieur pour produire ladite somme pondérée et ;
- une unité d'activation (38) effectuant ladite fonction d'activation (14) ;
**caractérisé en ce que** ladite unité d'activation comporte au moins une unité de décalage (42) apte à approximer une fonction d'activation non linéaire, le résultat de ladite fonction d'activation approximée étant obtenu par un ou plusieurs décalages arithmétiques des bits de ladite somme pondérée, l'unité de décalage (42) étant apte à effectuer une opération de saturation directement sur ladite somme pondérée ou sur un résultat temporaire de la fonction d'activation avant saturation, la donnée saturée étant délivrée en sortie (40) de ladite unité d'activation, la saturation étant réalisée par un décalage à droite sur ladite somme, dont la valeur est déduite de la position de saturation désirée, par conservation des bits de poids faible en fonction de la précision finale voulue, l'unité d'activation (38) comportant un rectifieur linéaire apte à effectuer en outre une rectification linéaire sur la donnée présente en sortie de l'unité de décalage (42), ladite donnée étant le résultat d'une saturation effectuée directement sur ladite somme pondérée présente en entrée de ladite unité d'activation, ladite rectification linéaire réalisant ladite fonction d'activation.

2. Circuit neuronal selon la revendication 1 **caractérisé en ce qu'**il comporte un registre (35) mémorisant la position du bit de poids fort de chaque nouvelle donnée accumulée dans ledit accumulateur (34), la mémorisation de ladite position étant effectuée simultanément à la mémorisation dans le registre d'accumulation (36) de l'accumulation de ladite nouvelle donnée ou du chargement dudit registre d'accumulation (36).

3. Circuit neuronal selon la revendication 2, **caractérisé en ce que** ladite position du bit de poids fort est transmise à l'unité de décalage (42), le décalage appliqué étant déduit de ladite position, ou d'une position de bit de poids fort précédemment sauvegardée ou d'un paramètre quelconque fixé par l'utilisateur ou contenu en mémoire ou précédemment calculé.

4. Circuit neuronal selon l'une quelconque des revendications précédentes, **caractérisé en ce que** ladite position du bit de poids fort est transmise à l'unité de décalage (42), le décalage appliqué pour l'opération de saturation étant déduit de ladite position ou d'une position de bit de poids fort précédemment sauvegardée, ou d'un paramètre quelconque fixé par l'utilisateur ou contenu en mémoire ou précédemment calculé.

5. Circuit neuronal selon l'une quelconque des revendications précédentes, **caractérisé en ce que** ladite unité d'activation (38) est apte à approximer une fonction à base radiale, à partir d'un enchaînement d'opérations de décalage et de saturations effectuées par ladite unité de décalage (42)

6. Circuit neuronal selon la revendication 5, **caractérisé en ce que** la valeur de chaque décalage est déduite de ladite position du bit de poids fort de la donnée décalée ou d'une position de bit précédemment sauvegardée, ou d'un paramètre quelconque fixé par l'utilisateur ou contenu en mémoire ou précédemment calculé.

7. Circuit neuronal selon l'une quelconque des revendications précédentes, **caractérisé en ce qu'**il comporte une unité arithmétique et logique (39) réalisant des opérations sur les signaux d'entrées (12).

8. Architecture neuronale, **caractérisée en ce qu'**elle est composée de circuits neuronaux selon l'une quelconque des revendications précédentes.

9. Procédé d'exécution d'un réseau de neurones artificiels, ledit procédé réalisant pour chaque neurone une somme pondérée de signaux numérisés d'entrée (12), codés sur un nombre de bits donné, et appliquant une fonction d'activation (14) à ladite somme pondérée pour produire en sortie (40) un signal d'activation, **caractérisé en ce que** ledit procédé comporte au moins les étapes suivantes :
- multiplier (31) chaque signal d'entrée (*x₁* à *xₙ*) avec une valeur de poids (*w₁ⱼ* à *wₙⱼ*) ;
- accumuler (34) les résultats de la multiplication dans un accumulateur pour produire ladite somme pondérée et ;
- effectuer (38) ladite fonction d'activation (14) par un ou plusieurs décalages arithmétiques (42) des bits de ladite somme pondérée stockés dans ledit accumulateur,
- effectuer une opération de saturation directement sur ladite somme pondérée ou sur un résultat temporaire de la fonction d'activation avant saturation, la donnée saturée étant délivrée en sortie (40) de ladite fonction d'activation, la saturation étant réalisée par un décalage à droite sur ladite somme, dont la valeur est déduite de la position de saturation désirée, par conservation des bits de poids faible en fonction de la précision finale voulue,
- Effectuer une rectification linéaire sur la donnée présente en sortie de l'opération de saturation, ladite donnée étant le résultat d'une saturation effectuée directement sur ladite somme pondérée, ladite rectification linéaire réalisant ladite fonction d'activation.

10. Procédé selon la revendication 9, **caractérisé en ce qu'**il comporte une étape de mémorisation (35) de la position du bit de poids fort de chaque nouvelle donnée accumulée, ladite étape de mémorisation étant effectuée simultanément à la mémorisation (36) de ladite nouvelle donnée.

11. Procédé selon la revendication 10, **caractérisé en ce que** le ou les décalages appliqués pour effectuer ladite fonction d'activation sont déduits de ladite position ou d'une position de bit de poids fort précédemment sauvegardée, ou d'un paramètre quelconque fixé par l'utilisateur ou contenu en mémoire ou précédemment calculé.

12. Procédé selon l'une des revendications 9 ou 10, **caractérisé en ce que** le ou les décalages appliqués pour l'opération de saturation sont déduits de ladite position ou d'une position de bit de poids fort précédemment sauvegardée, ou d'un paramètre quelconque fixé par l'utilisateur ou contenu en mémoire ou précédemment calculé..

13. Procédé selon l'une quelconque des revendications 10 à 12, **caractérisé en ce qu'**il réalise l'approximation d'une fonction d'activation à base radiale, à partir d'un enchaînement d'opérations de décalages ainsi que par des saturations.

14. Procédé selon la revendication 13, **caractérisé en ce que** la valeur de chaque décalage est déduit de ladite position du bit de poids fort de la donnée décalée ou d'une position de bit précédemment sauvegardée, ou d'un paramètre quelconque fixé par l'utilisateur ou contenu en mémoire ou précédemment calculé.

15. Procédé selon l'une quelconque des revendications 9 à 14, **caractérisé en ce qu'**il est apte à être appliqué au moyen d'une architecture selon la revendication 8.

16. Produit programme d'ordinateur, comprenant des instructions de code permettant d'effectuer les étapes du procédé selon l'une des revendications 9 à 15 lorsque ledit programme d'ordinateur est exécuté sur un circuit neuronal selon l'une des revendications 1 à 7 ou au moyen d'une architecture selon la revendication 8.

## Patentansprüche

1. Neuronaler Kreis, der in der Lage ist, eine gewichtete Summe (11) von digitalisierten Eingangssignalen (12) zu erzeugen, die auf einer gegebenen Anzahl von Bits verschlüsselt sind, und eine Aktivierungsfunktion (14) auf die gewichtete Summe anzuwenden, um am Ausgang (40) ein digitalisiertes Aktivierungssignal zu erzeugen, wobei der Kreis mindestens Folgendes aufweist:
- einen Multiplikator (31), der jedes Eingangssignal (*x₁* bis *xₙ*) mit einem Gewichtswert (*w₁ⱼ* bis *wₙⱼ*) multipliziert;
- einen Akkumulator (34), der die Ergebnisse des Multiplikators akkumuliert, um die gewichtete Summe zu erzeugen; und
- eine Aktivierungseinheit (38), die die Aktivierungsfunktion (14) ausführt;
**dadurch gekennzeichnet, dass** die Aktivierungseinheit mindestens eine Verschiebeeinheit (42) aufweist, die in der Lage ist, eine nicht lineare Aktivierungsfunktion anzunähern, wobei das Ergebnis der angenäherten Aktivierungsfunktion durch eine oder mehrere arithmetische Verschiebung(en) der Bits der gewichteten Summe erhalten wird, wobei die Verschiebeeinheit (42) in der Lage ist, eine Sättigungsoperation direkt an der gewichteten Summe oder an einem vorübergehenden Ergebnis der Aktivierungsfunktion vor der Sättigung auszuführen, wobei das gesättigte Datum am Ausgang (40) der Aktivierungseinheit abgegeben wird, wobei die Sättigung durch eine Verschiebung nach rechts auf der Summe durchgeführt wird, deren Wert von der gewünschten Sättigungsposition abgezogen wird, durch Erhaltung der niedrigstwertigen Bits in Abhängigkeit von der gewollten endgültigen Präzision, wobei die Aktivierungseinheit (38) einen linearen Gleichrichter aufweist, der in der Lage ist, des Weiteren eine lineare Gleichrichtung an dem am Ausgang der Verschiebeeinheit (42) vorliegenden Datum vorzunehmen, wobei das Datum das Ergebnis einer direkt an der gewichteten Summe vorgenommenen Sättigung ist, die am Eingang der Aktivierungseinheit vorliegt, wobei die lineare Gleichrichtung die Aktivierungsfunktion durchführt.

2. Neuronaler Kreis nach Anspruch 1, **dadurch gekennzeichnet, dass** er ein Register (35) aufweist, das die Position des höchstwertigen Bits von jedem neuen, in dem Akkumulator (34) akkumulierten Datum speichert, wobei das Speichern der Position gleichzeitig mit dem Speichern der Akkumulation des neuen Datums in dem Akkumulationsregister (36) oder dem Laden des Akkumulationsregisters (36) vorgenommen wird.

3. Neuronaler Kreis nach Anspruch 2, **dadurch gekennzeichnet, dass** die Position des höchstwertigen Bits an die Verschiebeeinheit (42) übertragen wird, wobei das angewandte Verschieben von der Position oder von einer Position eines höchstwertigen Bits, die zuvor gespeichert worden ist, oder von irgendeinem Parameter, der von dem Benutzer festgesetzt wurde oder im Speicher enthalten ist oder zuvor berechnet wurde, abgezogen wird.

4. Neuronaler Kreis nach einem der vorhergehenden Ansprüche, **dadurch gekennzeichnet, dass** die Position des höchstwertigen Bits an die Verschiebeeinheit (42) übertragen wird, wobei das für die Sättigungsoperation angewandte Verschieben von der Position oder von einer Position eines höchstwertigen Bits, die zuvor gespeichert worden ist, oder von irgendeinem Parameter, der von dem Benutzer festgesetzt wurde oder im Speicher enthalten ist oder zuvor berechnet wurde, abgezogen wird.

5. Neuronaler Kreis nach einem der vorhergehenden Ansprüche, **dadurch gekennzeichnet, dass** die Aktivierungseinheit (38) in der Lage ist, anhand einer Sequenz von Verschiebe- und Sättigungsoperationen, die von der Verschiebeeinheit (42) vorgenommen werden, eine radiale Basisfunktion anzunähern.

6. Neuronaler Kreis nach Anspruch 5, **dadurch gekennzeichnet, dass** der Wert jeder Verschiebung von der Position des höchstwertigen Bits des verschobenen Datums oder von einer zuvor gespeicherten Bitposition oder von irgendeinem Parameter, der von dem Benutzer festgesetzt wurde oder im Speicher enthalten ist oder zuvor berechnet wurde, abgezogen wird.

7. Neuronaler Kreis nach einem der vorhergehenden Ansprüche, **dadurch gekennzeichnet, dass** er eine arithmetische und logische Einheit (39) aufweist, die Operationen an den Eingangssignalen (12) ausführt.

8. Neuronale Architektur, **dadurch gekennzeichnet, dass** sie aus neuronalen Kreisen nach einem der vorhergehenden Ansprüche aufgebaut ist.

9. Verfahren zum Ausführen eines Netzes von künstlichen Neuronen, wobei das Verfahren für jedes Neuron eine gewichtete Summe von digitalisierten Eingangssignalen (12) erzeugt, die auf einer gegebenen Anzahl von Bits verschlüsselt sind, und eine Aktivierungsfunktion (14) auf die gewichtete Summe anwendet, um am Ausgang (40) ein Aktivierungssignal zu erzeugen, **dadurch gekennzeichnet, dass** das Verfahren mindestens die folgenden Schritte aufweist:
- Multiplizieren (31) eines jeden Eingangssignals (*x₁* bis *xₙ*) mit einem Gewichtswert (*w₁ⱼ* bis *wₙⱼ*);
- Akkumulieren (34) der Ergebnisse der Multiplikation in einem Akkumulator zum Erzeugen der gewichteten Summe und
- Vornehmen (38) der Aktivierungsfunktion (14) durch eine oder mehrere arithmetische Verschiebungen (42) der Bits der gewichteten Summe, die in dem Akkumulator gespeichert sind,
- Vornehmen einer Sättigungsoperation direkt an der gewichteten Summe oder an einem vorübergehenden Ergebnis der Aktivierungsfunktion vor der Sättigung, wobei das gesättigte Datum am Ausgang (40) der Aktivierungsfunktion abgegeben wird, wobei die Sättigung durch eine Verschiebung nach rechts auf der Summe durchgeführt wird, deren Wert von der gewünschten Sättigungsposition abgezogen wird, durch Erhaltung der niedrigstwertigen Bits in Abhängigkeit von der gewollten endgültigen Präzision,
- Vornehmen einer linearen Gleichrichtung an dem am Ausgang der Sättigungsoperation vorliegenden Datum, wobei das Datum das Ergebnis einer direkt an der gewichteten Summe vorgenommenen Sättigung ist, wobei die lineare Gleichrichtung die Aktivierungsfunktion durchführt.

10. Verfahren nach Anspruch 9, **dadurch gekennzeichnet, dass** es einen Schritt (35) zum Speichern der Position des höchstwertigen Bits eines jeden neuen akkumulierten Datums aufweist, wobei der Speicherschritt gleichzeitig mit dem Speichern (36) des neuen Datums ausgeführt wird.

11. Verfahren nach Anspruch 10, **dadurch gekennzeichnet, dass** die angewandte(n) Verschiebung(en) zum Vornehmen der Aktivierungsfunktion von der Position oder von einer Position eines höchstwertigen Bits, die zuvor gespeichert worden ist, oder von irgendeinem Parameter, der von dem Benutzer festgesetzt wurde oder im Speicher enthalten ist oder zuvor berechnet wurde, abgezogen wird (werden).

12. Verfahren nach einem der Ansprüche 9 oder 10, **dadurch gekennzeichnet, dass** die für die Sättigungsoperation angewandte(n) Verschiebung(en) von der Position oder von einer Position eines höchstwertigen Bits, die zuvor gespeichert worden ist, oder von irgendeinem Parameter, der von dem Benutzer festgesetzt wurde oder im Speicher enthalten ist oder zuvor berechnet wurde, abgezogen wird (werden).

13. Verfahren nach einem der Ansprüche 10 bis 12, **dadurch gekennzeichnet, dass** es die Annäherung einer radialen Basisaktivierungsfunktion anhand einer Sequenz von Verschiebungsoperationen sowie durch Sättigungen durchführt.

14. Verfahren nach Anspruch 13, **dadurch gekennzeichnet, dass** der Wert jeder Verschiebung von der Position des höchstwertigen Bits des verschobenen Datums oder von einer zuvor gespeicherten Bitposition oder von irgendeinem Parameter, der von dem Benutzer festgesetzt wurde oder im Speicher enthalten ist oder zuvor berechnet wurde, abgezogen wird.

15. Verfahren nach einem der Ansprüche 9 bis 14, **dadurch gekennzeichnet, dass** es in der Lage ist, mittels einer Architektur nach Anspruch 8 angewandt zu werden.

16. Computerprogrammprodukt, umfassend Codeanweisungen, die es ermöglichen, die Schritte des Verfahren nach einem der Ansprüche 9 bis 15 auszuführen, wenn das Computerprogramm auf einem neuronalen Kreis nach einem der Ansprüche 1 bis 7 oder mittels einer Architektur nach Anspruch 8 ausgeführt wird.

## Claims

1. A neural circuit capable of producing a weighted sum (11) of digitised input signals (12), which are encoded on a given number of bits, and of applying an activation function (14) to said weighted sum in order to produce a digitised activation signal at the output (40), said circuit having at least:
- one multiplier (31) multiplying each input signal (*x₁* to *xₙ*) by a weight value (*w₁ⱼ* to *Wₙⱼ*);
- one accumulator (34) accumulating the results of said multiplier in order to produce said weighted sum, and;
- one activation unit (38) performing said activation function (14);
**characterised in that** said activation unit has at least one shift unit (42) capable of approximating a nonlinear activation function, the result of said approximated activation function being obtained by one or more arithmetic shifts of the bits of said weighted sum, the shift unit (42) being capable of performing a saturation operation directly on said weighted sum or on a temporary result of the activation function before saturation, the saturated datum being delivered at the output (40) of said activation unit, the saturation being performed by a right shift on said sum, the value of which is deduced from the desired saturation position, by preserving the least significant bits according to the desired final precision, the activation unit (38) having a linear rectifier capable of further performing a linear rectification on the datum present at the output of the shift unit (42), said datum being the result of a saturation performed directly on said weighted sum present at the input of said activation unit, said linear rectification carrying out said activation function.

2. The neural circuit according to claim 1, **characterised in that** it has a register (35) storing the position of the most significant bit of each new datum accumulated in said accumulator (34), the storage of said position being performed simultaneously with the storage in the accumulation register (36) of the accumulation of said new datum or of the loading of said accumulation register (36).

3. The neural circuit according to claim 2, **characterised in that** said position of the most significant bit is transmitted to the shift unit (42), the shift applied being deduced from said position, or from a previously saved most significant bit position or from any parameter fixed by the user or contained in memory or previously calculated.

4. The neural circuit according to any one of the preceding claims, **characterised in that** said position of the most significant bit is transmitted to the shift unit (42), the shift applied for the saturation operation being deduced from said position or from a previously saved most significant bit position, or from any parameter fixed by the user or contained in memory or previously calculated.

5. The neural circuit according to any one of the preceding claims, **characterised in that** said activation unit (38) is capable of approximating a radial basis function, from a sequence of shift and saturation operations performed by said shift unit (42).

6. The neural circuit according to claim 5, **characterised in that** the value of each shift is deduced from said position of the most significant bit of the shifted datum or from a previously saved bit position, or from any parameter fixed by the user or contained in memory or previously calculated.

7. The neural circuit according to any one of the preceding claims, **characterised in that** it has an arithmetic and logic unit (39) carrying out operations on the input signals (12).

8. A neural architecture, **characterised in that** it is made up of neural circuits according to any one of the preceding claims.

9. A method for executing an artificial neural network, said method producing, for each neuron, a weighted sum of digitised input signals (12), which are encoded on a given number of bits, and applying an activation function (14) to said weighted sum in order to produce an activation signal at the output (40), **characterised in that** said method involves at least the following steps:
- multiplying (31) each input signal (*x₁* to *xₙ*) by a weight value (*w₁ⱼ* to *wₙⱼ*);
- accumulating (34) the results of the multiplication in an accumulator in order to produce said weighted sum, and;
- performing (38) said activation function (14) by means of one or more arithmetic shifts (42) of the bits of said weighted sum that are stored in said accumulator,
- performing a saturation operation directly on said weighted sum or on a temporary result of the activation function before saturation, the saturated datum being delivered at the output (40) of said activation function, the saturation being performed by a right shift on said sum, the value of which is deduced from the desired saturation position, by preserving the least significant bits according to the desired final precision,
- performing a linear rectification on the datum present at the output of the saturation operation, said datum being the result of a saturation performed directly on said weighted sum, said linear rectification carrying out said activation function.

10. The method according to claim 9, **characterised in that** it has a step of storage (35) of the position of the most significant bit of each new accumulated datum, said storage step being performed simultaneously with the storage (36) of said new datum.

11. The method according to claim 10, **characterised in that** the shift(s) applied in order to perform said activation function is or are deduced from said position or from a previously saved most significant bit position, or from any parameter fixed by the user or contained in memory or previously calculated.

12. The method according to one of claims 9 or 10, **characterised in that** the shift(s) applied for the saturation operation is or are deduced from said position or from a previously saved most significant bit position, or from any parameter fixed by the user or contained in memory or previously calculated.

13. The method according to any one of claims 10 to 12, **characterised in that** it carries out the approximation of a radial basis activation function, from a sequence of shift operations as well as by means of saturations.

14. The method according to claim 13, **characterised in that** the value of each shift is deduced from said position of the most significant bit of the shifted datum or from a previously saved bit position, or from any parameter fixed by the user or contained in memory or previously calculated.

15. The method according to any one of claims 9 to 14, **characterised in that** it is capable of being applied by means of an architecture according to claim 8.

16. A computer program product, comprising code instructions allowing the steps of the method according to claims 9 to 15 to be performed when said computer program is executed on a neural circuit according to one of claims 1 to 7 or by means of an architecture according to claim 8.
